# EUROPEAN PATENT APPLICATION

(11) **EP 3 666 486 A1**
(43) Date of publication of application: **17.06.2020**
(21) Application number: 19215335.1
(22) Date of filing: 11.12.2019
(51) Int. Cl.: B29C 33/38, B33Y 80/00, B29C 64/00

(54) **METHOD FOR THE PRODUCTION OF MOULDS**

(30) Priority: 14.12.2018 IT 201800011093
(71) Applicant: C.M.S. S.p.A., 24019 Zogno (BG) (IT)
(72) Inventor: Bernini, Maurizio, 27058 Voghera (PV) (IT)
(74) Representative: Villanova, Massimo

(57) **Abstract**

A method is disclosed for producing a mould that is suitable for moulding a tool (Z) that is suitable for providing support and shape to a preform made of composite material, in which the mould defines a forming die provided with a forming surface with double curving, the method providing the forming of a monolithic solid by an additive manufacturing technique in a construction direction, the monolithic solid comprising a sandwich structure of curved shape that extends between two end edges extending in length in the construction direction, the sandwich structure comprising an inner core (4) that has a section with a corrugated profile.

## Description

### Background of the invention

The invention relates to a method for the production of moulds, in particular for producing a mould configured for moulding a tool suitable for providing support and shape to a preform made of composite material intended to be subsequently processed, in particular laminated and cured. The mould produced by the method in question will define, substantially, a forming die provided, generally, with a complex shape, like, for example, a surface with a double curve. The relatively complex shape of the die will substantially correspond to a shape of the moulding tool, thus to a shape of the preform.

Specifically, but not exclusively, the mould made can be usefully used in the aerospace industry and/or in the car industry, in particular in a clean room or another laminating shop, in an autoclave or another shop equipped for infusion, for the production of moulds or final parts made of CFRP (carbon fibre reinforced polymer), or GFRP (glass fibre reinforced polymers), or other fibre-reinforced materials.

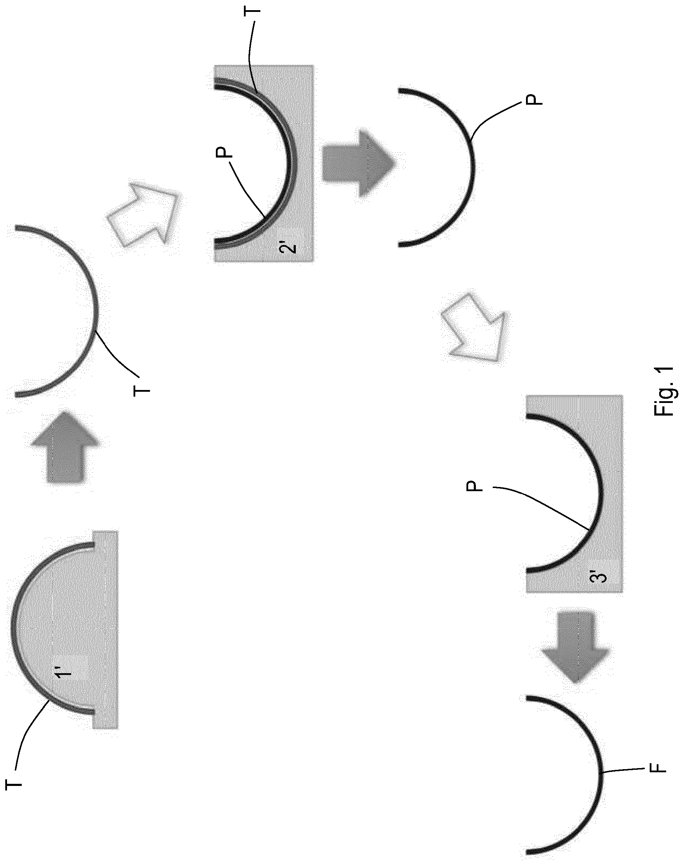

Figure 1 shows the steps of a production cycle according to the prior art, in particular for the production of a product made of carbon fibre reinforced polymer (CFRP), that comprises, in sequence, a first moulding step for moulding a tool T, in particular made of carbon fibre reinforced polymer (CFRP), obtained in a mould or model 1', a second moulding step for moulding a preform P, in particular also made of a carbon fibre reinforced polymer (CFRP), obtained on the tool T positioned on a support frame 2', and a third step in which the (suitably laminated and cured) preform P is positioned on a processing template 3' where it can undergo finishing machining (for example CNC milling) to obtain the finished workpiece F.

One of the problems of the prior art is that of improving the production of the mould or model 1' usable as a die for moulding a moulding tool T that can in turn be used for forming a preform P.

### Summary of the invention

One object of the invention is to improve a solution that is an alternative to the problem of producing a mould or model that is usable as a die for moulding an object with a relatively curved shape.

One advantage is to provide a method for producing moulds that are usable for laminating and polymerizing objects made of composite material, in particular a method for producing moulds by additive technique.

One advantage is to enable a tool to be formed that is usable as a die for moulding a laminated preform provided with a relatively complex shape like, in particular, a sheet shape with a double curve.

One advantage is to make available a mould that is constructionally simple and cheap and usable for forming a tool that can act as a die for moulding a laminated preform.

One advantage is to make a mould configured for moulding a tool that is suitable for providing support and shape for a preform, in which the mould is relatively light but with excellent mechanical features.

One advantage is to make a mould configured for moulding a tool that is suitable for providing support and shape for a preform, in which the mould has a hollow structure that is almost insensitive to pressure of an autoclave.

One advantage is to make a mould configured for moulding a tool that is suitable for providing support and shape for a preform, in which the mould has surfaces with tilts comprised between ± 45° without the need to use removable supports to make the mould.

Such objects and advantages, and still others, are achieved by a production method and a mould according to one or more of the claims set out below.

In one embodiment, a production method for producing a mould that is suitable for moulding a tool that is suitable for providing support and shape to a preform made of composite material, comprises the step of forming a monolithic solid by an additive manufacturing technique in a construction direction, in which the monolithic solid comprises a sandwich structure of curved shape that extends between two end edges extending in length in the construction direction, the sandwich structure comprising an inner core that has a section with a corrugated profile.

### Brief description of the drawings

The invention can be better understood and implemented with reference to the attached drawings that illustrate an embodiment thereof by way of non-limiting example, in which:
Figure 1 shows a diagram of a production method according to the prior art;
Figure 2 is a perspective view of an embodiment according to the present invention of a mould or model that is usable as a die for moulding a moulding tool intended for forming a preform;
Figure 3 shows an enlarged detail of Figure 2;
Figure 4 is a perspective view of a step of a production method for producing a moulding tool making use of the mould or model of Figure 2.

### Detailed description

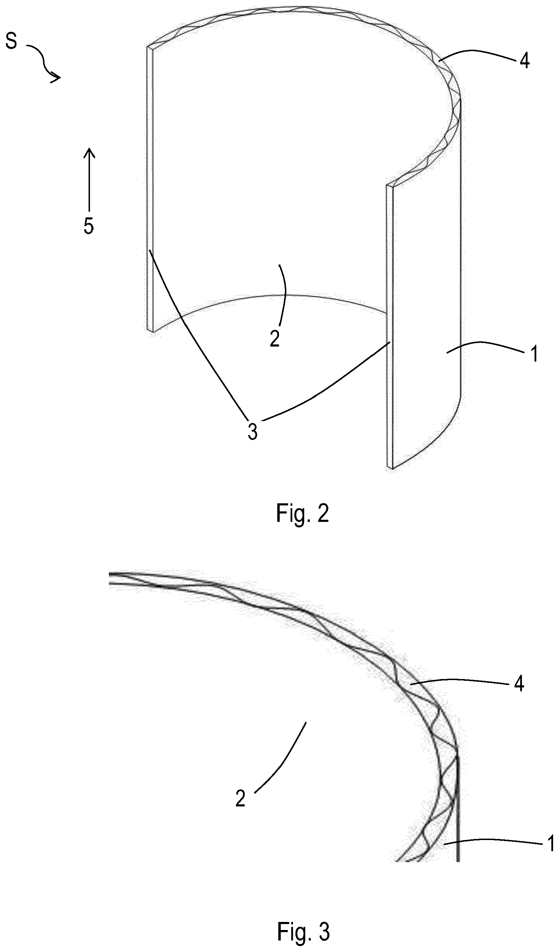

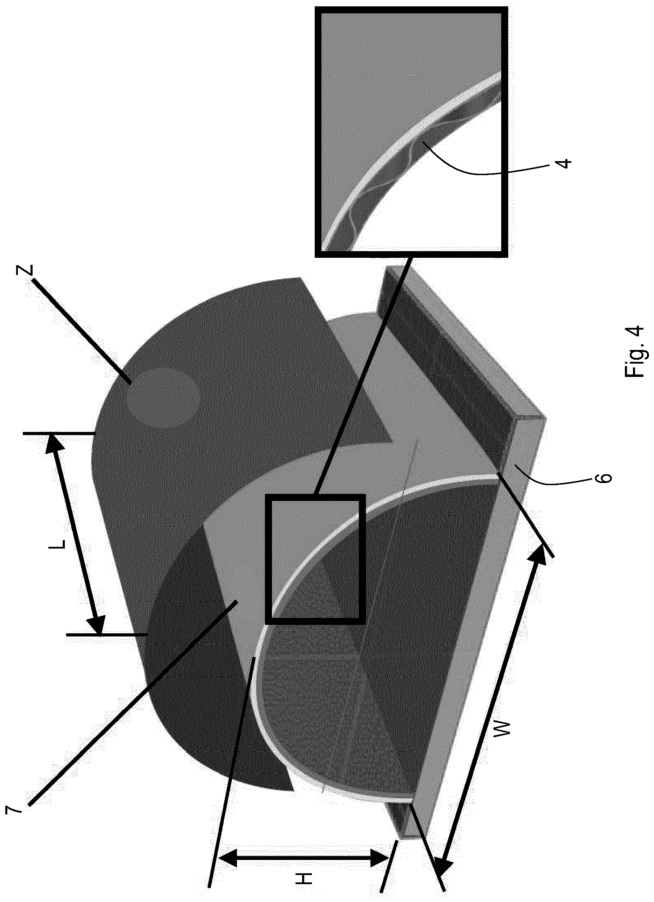

With reference to the aforesaid Figures 2 to 4, overall with S a monolithic solid has been indicated that is formed by an additive manufacturing technique in a construction direction 5.

The monolithic solid S may comprise, in particular, a sandwich structure comprising an outer surface 1, an inner surface 2 and an intermediate portion 4 acting as a connection core between the inner surface 2 and the outer surface 1. The sandwich structure may, in particular, extend with a curved shape that extends between two end edges 3 extending in length in the construction direction 5. The two end edges 3 may be far from one another.

A section of the intermediate portion 4 according to a plane that is orthogonal to the construction direction 5 may have, as in the specific embodiment disclosed here, a corrugated profile. The corrugated profile may comprise, as in this specific embodiment, a regular sinusoidal profile.

The monolithic solid may comprise, in particular (according to an embodiment that is not illustrated), two or more sections that are fixed (for example glued) together and are fixed to a support structure 6 (for example by structural bonding).

The support structure 6 may comprise, in particular, a horizontal platform.

A tilt of the outer surface 1 with respect to the construction direction 5 may be, in particular, comprised in the range ± 45°. A tilt of the inner surface 2 with respect to the construction direction 5 may be, in particular, comprised in the range ± 45°.

The monolithic solid S may have, in particular, a width W greater than 1000 mm (millimetres), for example equal to 2000 ± 1000 mm, and/or a length L greater than 1000 mm, for example the same as 2000 ± 1000 mm, and/or a height H greater than 500 mm, for example the same as 1000 ± 500 mm. It is nevertheless possible to provide other dimensions of the monolithic solid S.

A production method is disclosed here that comprises the step of forming the aforesaid monolithic solid S by the additive manufacturing technique (for example 3D moulding with polymeric material) in the construction direction 5.

The production method may comprise, in particular, the step of fixing the two end edges 3 of the monolithic solid S to a support structure 6 in such a manner that the outer surface 1 faces upwards and is usable as a forming die for moulding an object T.

The production method may comprise, in particular, the step of finishing the outer surface 1 by CNC machining, for example by machining that comprises milling.

The production method may comprise, in particular, the step of covering the outer surface 1 with a layer 7 of pasty material, for example a pasty material of epoxy type.

The production method may comprise, in particular, the step of curing (polymerizing and hardening) the aforesaid layer 7 of pasty material and finishing an outer surface of the aforesaid layer 7 by CNC machining, for example by machining that comprises milling.

The production method may comprise, in particular, the step of moulding an object Z made of composite material using the outer surface 1 (possibly coated with the layer 7) as a forming die for forming the object Z.

The object Z may comprise, in particular, a tool, for example made of a carbon fibre reinforced polymer (CFRP), intended to be positioned on a support frame and used as a die for moulding a preform, in particular also made of a carbon fibre reinforced polymer (CFRP).

In particular, the aforesaid preform (suitably laminated and cured) is positioned on a processing template where it can undergo finishing machining (for example CNC milling) to obtain a finished workpiece.

Substantially, the monolithic solid S (possibly covered with the layer 7) may be intended to act as a mould or model usable, in particular, as a die for moulding a moulding tool that may in turn be used for forming a preform (in particular a preform with a complex outer surface, for example a surface with a double curve).

The preform may comprise, in particular, a laminated preform with a laminating method that may comprise, for example, a manual or automatic method (for example AFP, ATL).

It is possible to provide polymerization of the object Z, for example by infusion in a vacuum or autoclave. In the case of polymerization in an autoclave, the polymerization temperature may be, in particular, below the heat deflection temperature under the weight of the material used for the construction of the tool (monolithic solid S).

The production method may comprise, in particular, a method of 3D moulding by layers, for example using SEAM technology, to make the aforesaid hollow monolithic solid S, structured as a sandwich, comprising at least the outer surface 1, the inner surface 2, the two end edges 3, the intermediate portion 4 or connection core (of sinusoidal shape). The elements disclosed above are all connected integrally to one another and moulded in the construction direction 5.

As said, the edges 3 of the 3D printed solid are fixed (glued) to the support structure 6 (platform) so as to obtain the outer surface 1 in the upper position facing upwards.

Further, as said, for example because of limits to the maximum 3D moulding height, it is possible for the monolithic solid S to be obtained in two or more sections that can be fixed integrally (glued) to one another and/or be fixed integrally (glued) to the support structure 6.

## Claims

1. Production method, including the steps of:
- forming a monolithic solid (S) by an additive manufacturing technique in a construction direction (5), said monolithic solid (S) comprising at least one outer surface (1) and one inner surface (2); and
- finishing said outer surface (1) so as to make it suitable and usable as a moulding die to mould an object (Z).

2. Method according to claim 1, wherein said step of finishing said outer surface (1) comprises the steps of:
- operating a mechanical processing; and
- depositing material on the outer surface (1).

3. Method according to claim 2, wherein said step of finishing said outer surface (1) is carried out by a CNC mechanical processing of said outer surface (1) and, subsequently, by depositing a fibrous material on the finished part.

4. Method according to claim 2, wherein said step of finishing said outer surface (1) is carried out by depositing a layer (7) of material, for example epoxy pasty material, and subsequently by CNC mechanical processing of said layer (7).

5. Method according to any one of the preceding claims, comprising the steps of:
- arranging said monolithic solid (S) in an operative position in which said outer surface (1) is facing upwards;
- using said outer surface (1) facing upwards as a forming die to mould the object (Z).

6. Method according to any one of the preceding claims, wherein said outer surface (1) is at least partly convex and said inner surface (2) is at least partly concave and/or wherein said outer surface (1) is at least partly concave and said inner surface (2) is at least partly convex.

7. Method according to any one of the preceding claims, wherein said monolithic solid (S) comprises a sandwich structure comprising at least one intermediate portion (4) acting as a connection core between said outer surface (1) and said inner surface (2).

8. Method according to claim 7, wherein a section of said intermediate portion (4) made according to a plane orthogonal to said construction direction (5) has a corrugated profile; said corrugated profile comprising, in particular, a regular sinusoidal profile.

9. Method according to claim 7 or 8, wherein said sandwich structure is provided with a curved shape which develops between two end edges (3) which are distant from each other and which are extended in length in said construction direction (5).

10. Method according to claim 9, comprising the step of arranging said monolithic solid (S) in an operative position in which said outer surface (1) is facing upwards, in said operating position said two end edges (3) being fixed to a support structure (6).

11. Method according to any one of the preceding claims, wherein said monolithic solid (S) comprises two or more sections which are fixed to each other and in turn fixed to a supporting structure (6).

12. Method according to claim 11, wherein said two or more sections are fixed together by gluing and are fixed to said support structure (6) by structural bonding.

13. Method according to any one of the preceding claims, wherein an inclination of said outer surface (1) and/or of said inner surface (2) with respect to said construction direction (5) is in the range ± 45°.

14. Mould, in particular made by a method according to any one of the preceding claims, comprising a monolithic solid (S) produced by an additive manufacturing technique in a construction direction (5), said monolithic solid (S) comprising at least one outer surface (1) and an inner surface (2), said outer surface (1) being suitable and usable as a moulding die for moulding an object (Z).

15. Mould according to claim 14, wherein:
- said monolithic solid (S) comprises at least one sandwich structure comprising at least one intermediate portion (4) acting as a connection core between said outer surface (1) and said inner surface (2);
- said sandwich structure is, optionally, developed with a curved shape comprised between two end edges (3) extended in length in said construction direction (5) and distant from each other;
- a section of said intermediate portion (4) according to a plane orthogonal to said construction direction (5) has, optionally, a corrugated profile;
- said monolithic solid (S) comprises, optionally, two or more sections fixed to each other and/or fixed to a supporting structure;
- an inclination of said outer surface (1) with respect to said construction direction (5) is, optionally, in the range ± 45°;
- a tilt of said inner surface (2) with respect to said construction direction (5) is, optionally, in the range ± 45°.
